# EUROPÄISCHE PATENTSCHRIFT

(11) **EP 2 576 987 B1**
(45) Veröffentlichungstag und Bekanntmachung des Hinweises auf die Patenterteilung: **02.09.2015**
(21) Anmeldenummer: 11752087.4
(22) Anmeldetag: 12.05.2011
(51) Int. Cl.: F01D 5/14

(54) **SCHAUFEL EINER STRÖMUNGSMASCHINE MIT PASSIVER GRENZSCHICHTBEEINFLUSSUNG**
BLADE OF A TURBOMACHINE, HAVING PASSIVE BOUNDARY LAYER CONTROL
AUBE DE TURBOMACHINE À INFLUENCE PASSIVE DE COUCHE LIMITE

(30) Priorität: 28.05.2010 DE 102010021925
(43) Veröffentlichungstag der Anmeldung: 10.04.2013
(73) Patentinhaber: MTU Aero Engines AG, 80995 München (DE)
(72) Erfinder: HÜBNER, Norbert, 85221 Dachau (DE); FRANKE, Matthias, 82110 Germering (DE)
(86) Internationale Anmeldenummer: PCT/DE2011/001066
(87) Internationale Veröffentlichungsnummer: WO 2011/147401

(56) Entgegenhaltungen:
- EP-A1- 2 019 186
- EP-A2- 0 132 638
- US-A1- 2005 214 113
- US-B2- 7 207 772
- XUE FENG ZHANG ET AL: "Separation and Transition Control on an Aft-Loaded Ultra-High-Lift LP Turbine Blade at Low Reynolds Numbers: Low-Speed Investigation", JOURNAL OF TURBOMACHINERY, Bd. 128, Nr. 3, 1. Januar 2006 (2006-01-01), Seiten 517-527, XP55010046, ISSN: 0889-504X, DOI: 10.1115/1.2187524

## Beschreibung

Die Erfindung betrifft eine Schaufel einer Strömungsmaschine mit passiver Grenzschichtbeeinflussung nach dem Oberbegriff des Patentanspruchs 1, wie aus der Druckschrift EP 0 132 638 A2 bekannt ist.

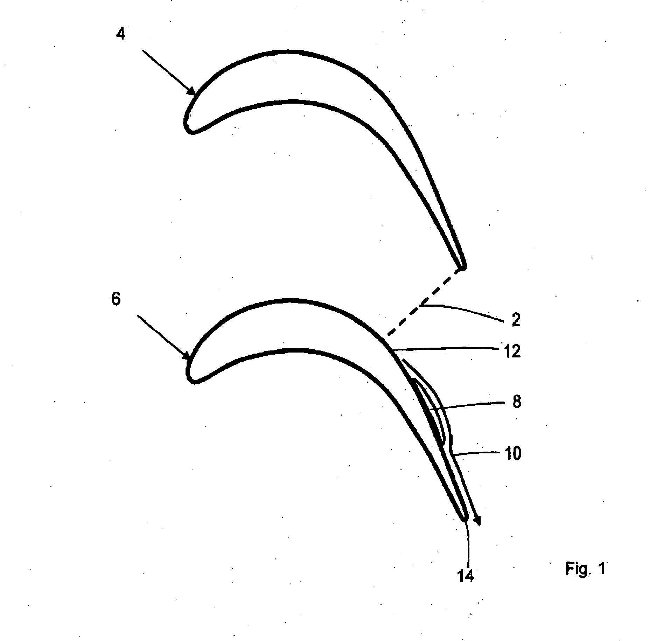

Schaufeln mit passiver Grenzschichtbeeinflussung werden beispielsweise bei Rotoren von Niederdruckturbinen eines Flugzeugtriebwerks zur Effizienzsteigerung eingesetzt. Die Grenzschicht bildet den Übergangsbereich zwischen der nahezu reibungsfreien Außenströmung des Fluids und der Schaufeloberfläche, in dem die Reibung des Fluids entlang der Oberfläche Geschwindigkeitsprofil senkrecht zur Oberfläche bestimmt. Sie ist für kleine Reynoldszahlen laminar und für hinreichend große Reynoldszahlen turbulent, wobei ihre Dicke in Strömungsrichtung zunimmt. Der Übergang von der laminaren Grenzschicht in die turbulente Grenzschicht wird Umschlagsbereich genannt und hängt von diversen Einflussgrößen wie der Oberflächenrauhigkeit, Geschwindigkeits- sowie Druckstörungen der Außenströmung sowie der lokalen Reynoldszahl ab. Im Umschlagsbereich, der sich wie in Figur 1 gezeigt, stromab einer Kanalengstelle 2 zwischen zwei benachbarten Schaufeln bzw. Schaufelblättern 4, 6 befindet, bildet sich eine Ablöseblase 8 aus, die dazu führt, dass die Vorwärtsströmung 10 der Schaufeloberfläche 12 nicht mehr folgen kann. Mit sinkender Reynoldszahl wächst die Ablösung in ihrer Länge und Dichte immer mehr an, bis sie sich stromab über eine Profilhinter- bzw. Abströmkante 14 erstreckt, so dass die Fluidteilchen der Profilkontur nicht mehr folgen können. Die Strömung reißt ab. Dies führt zu erheblich größeren Verlusten und verändert den Abströmwinkel des Gitters. Dies führt in einem Gitterverband z.B. mehrstufige Turbine zu Fehlanströmungen, und damit weiteren Verlusten in den strömabliegenden Gittern.

Aus der Druckschrift EP 2 019 186 A1 ist eine Schaufel mit einer passiven Grenzschichtbeeinflussung auf der Saugseite bekannt. Dabei ist die Grenzschichtbeeinflussung als eine nach außen ragende Stufe ausgebildet, die stromauf vom Geschwindigkeitsmaximum angeordnet ist.

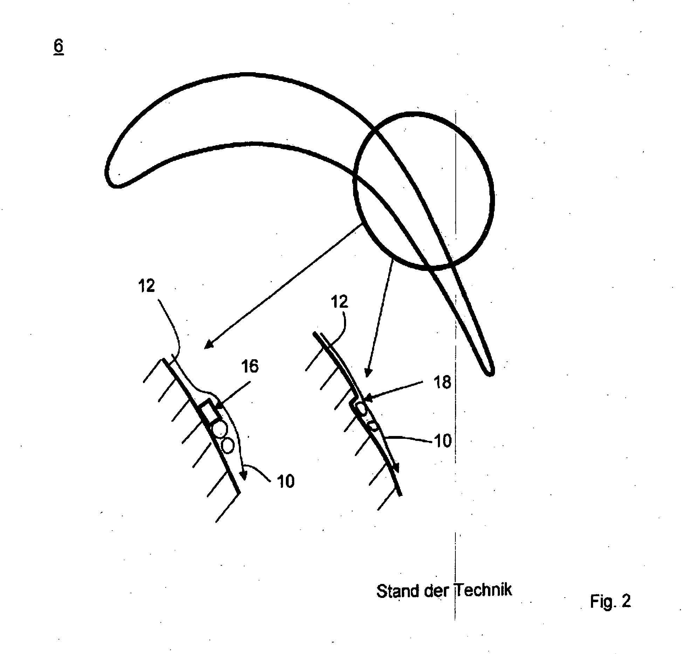

Um das Abreißverhalten der Strömung längs eines Profils und den Profilverlust positiv zu beeinflussen werden im Stand der Technik verschiedene Lösungsansätze zur Anordnung fester Turbulatoren bzw. Konturvariationen verfolgt, mittels denen die laminare Grenzschicht in eine turbulente Grenzschicht weiter stromauf am Profil umschlagen soll, so dass die Grenzschicht energiereicher wird und der Profilkontur leichter folgen kann. Zwei Beispiele für derartige, Turbulatoren sind in der anliegenden Figur 2 dargestellt. Demzufolge besteht die Möglichkeit, einen Turbulator durch eine geradlinige Stolperkante 16 auf der Profilsaugseite 12 oder durch eine geradlinige Zurückstufung 18 in der Profilsaugseite 12 auszubilden, um die Grenzschicht 10 mit zusätzlicher Energie anzureichern. Ebenso ist es aus der Druckschrift EP 0 132 638 A1 bekannt, die Stolperkante in einer Tangentialebene zur Profilsaugseite sägezahnartig zu profilieren. Des Weiteren ist es aus der Druckschrift EP 1 081 332 A1 bekannt, die Oberflächenrauhigkeit der Profilsaugseite partiell in einem Oberflächenbereich zu erhöhen. Ferner ist in der Druckschrift DE 10 2008 033 861 A1 der Anmelderin gezeigt, die Profilsaugseite in einem Bereich mit einer sich in Strömungsrichtung erstreckenden Wellenkontur zu versehen. Dabei ist es nachteilig, dass die Position des jeweiligen Turbulator nur für einen engen Betriebsbereich optimiert ist. So ist zum Beispiel die geradlinige Stolperkante üblicherweise in einem Abstand von der Profilvorderkante anzuordnen, der 75% einer axialen Sehnenlänge des Profils entspricht. In der DE 10 2008 033 861 A1 wird hingegen vorgeschlagen, die Wellenkontur in einem Abstand von der Profilvorderkante auszubilden, der 40% bis 90% der axialen Sehnenlänge entspricht. In der EP 1 081 332 A1 wird dagegen vorgeschlagen, die Oberflächenrauhigkeit in einem Abstand von der Profilvorderkante anzuordnen, der 70% bis 80% der Sehnenlänge entspricht, was sich jedoch ohne Kenntnis des Profils nicht auf die axiale Sehnenlänge umrechnen lässt.

Der vorliegenden Erfindung liegt die Aufgabe zugrunde, eine Schaufel einer Strömungsmaschine mit einer passiven Grenzschichtbeeinflussung zu schaffen, die die vorgenannten Nachteile beseitigt und eine optimale Position einer Konturvariante aufweist.

Diese Aufgabe wird gelöst durch eine Schaufel mit den Merkmalen des Patentanspruchs 1.

Eine erfindungsgemäße Schaufel einer Strömungsmaschine, insbesondere eine Turbinenschaufel eines Flugzeugtriebwerks, zum Umlenken einer Strömung, hat eine Profilvorderkante, eine Profilhinterkante und eine sich zwischen der Profilvorder- und der Profilhinterkante erstreckende Profilsaugseite und eine Profildruckseite. Zur passiven Grenzschichtbeeinflussung weist die Schaufel eine Konturvariation auf, die sich erfindungsgemäß unmittelbar stromab eines maximalen Geschwindigkeitsmaximums des ursprünglichen Schaufelprofils befindet. Durch die Anordnung der Konturvariation in diesem Bereich kann eine optimale Beeinflussung der Grenzschicht über einen großen Betriebsbereich bei verschiedenen Reynoldszahlen derart erfolgen, dass in Abhängigkeit von der Geometrie der Konturvariation ein Umschlag der laminaren Grenzschicht erfolgt oder die Grenzschicht vorzeitig destabilisiert wird, wobei letzteres zu einer vorgezogenen Transition führt. Dabei ist vorteilhaft, dass die Schaufel einfach anzufertigen ist bzw. nachträglich anzubringen ist.

Unter dem Begriff "unmittelbar" wird bei einem Ausführungsbeispiel ein Bereich von der Profilvorderkante verstanden, der etwa 50% bis 85% einer axialen Sehnenlänge der Schaufel entspricht.

Eine besonders günstige Beeinflussung der Grenzschicht ist zu beobachten, wenn sich die Konturvariation in einem Abstand von der Profilvorderkante befindet, der etwa 65% der axialen Sehnenlänge entspricht.

Erfingdungsgemäß ist ferner die Konturvariation als eine in Strömungsrichtung betrachtet negative Stufe ausgebildet. Diese Stufe hat sich als besonders wirkungsvoll über ein breites Reynoldszahlband erwiesen und lässt sich sowohl bei gegossenen Schaufeln als auch bei generativ hergestellten Schaufeln einfach und präzise herstellen.

Bei Flugzeugtriebwerken für Passagierflugzeuge treten gewöhnlich Reynoldszahlen auf, bei denen sich die Ablöseblase an der Profilsaugseite bildet. Dabei ist eine erfindungsgemäße verlustminderende Wirkung der Konturvariation zu beobachten, wenn die Stufe eine sich senkrecht zur Originalkontur der Profilsaugseite aus dem ursprünglichen Schaufelprofil nach Außen erstreckende Stufenfläche und eine sich ausgehend von einer außerhalb des ursprünglichen Schaufelprofils liegenden Stufenkante stromaufwärts tangential an die Originalkontur der Profilsaugseite herangeführte Tangentialfläche aufweist.

Bevorzugterweise hat die Stufe eine Stufenhöhe k im Bereich von 0,1 mm bis 0,4 mm. Die Stufenhöhe k richtet sich unter anderem nach der lokalen Verdrängungsdicke δ und der Reynoldszahl Re2 in der Abströmung, wobei besonders optimale Ergebnisse zum Beispiel mit einer Stufenhöhe von k = 0,17 mm oder k = 15 mm bei Reynoldszahl von Re2th ≤ 120.000 bzw. Re2th = 90.000 erzielt werden. Dabei gilt bevorzugterweise bei Reynoldszahlen von Re2th ≤ 120.000 ein Verhältnis k/ δ* von k/ δ* = 47 zwischen der Stufenhöhe k und einer lokalen Verdrängungsdicke δ*. Bei einer Reynoldszahl von Re2th = 90.000 mit δ* = 0, 37 mm bzw. bei Re2th= 120.000 mit δ* = 0, 32 mm sind hiermit Stufenhöhen k der Größenordnung nach festgelegt.

Sonstige vorteilhafte Ausführungsbeispiele der vorliegenden Erfindung sind Gegenstand weiterer Unteransprüche.

Im Folgenden wird ein bevorzugtes Ausführungsbeispiel der vorliegenden Erfindung anhand schematischen Zeichnung näher erläutert. Es zeigen:
Figur 1 ein bekanntes Schaufelgitter,
Figur 2 bekannte Konturvariationen zur passiven Grenzschichtbeeinflussung, und
Figur 3 eine Schaufel mit einer erfindungsgemäßen Konturvariation.

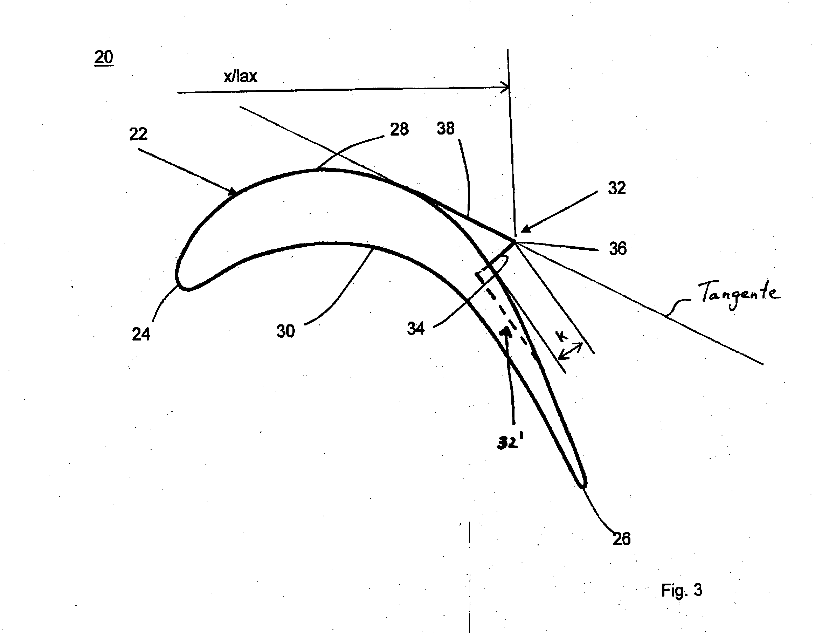

Gemäß der Darstellung in Figur 3 hat eine erfindungsgemäße Schaufel 20 einer Flugzeugtriebwerksschaufel, beispielsweise im Bereich der Niederdruckturbine, ein Profil 22 mit einer Profilvorderkante 24, einer Profilhinterkante 26 und einer sich zwischen der Profilvorderkante 24 und der Profilhinterkante 26 erstreckenden im Wesentlichen konkaven Profilsaugseite 28 und einer im Wesentlichen konvexen Profildruckseite 30. Zur passiven Grenzschichtbeeinflussung im Bereich der Profilsaugseite 28 weist die Schaufel 20 einen Turbulator bzw. eine Konturvariation 32 und 32' auf. Der erste Turbulator 32 ist eine erste Ausführungsform für eine Konturvariation. Dabei ist auf das ursprüngliche Profil Material aufgetragen worden.

Die zweite Ausführung der Konturvariation ist im zweiten. Turbulator 32' wiedergegeben. Dabei ist vom ursprünglichen Profil Material abgetragen worden. Eine Kombination dieser zwei Ausführungsformen ist denkbar.

Der Turbulator 32 ist unmittelbar stromab des Geschwindigkeitsmaximums des ursprünglichen Profils 22 bei x/lax ≈ 0, 65 bzw. 65% angeordnet, wobei lax die axiale Sehnenlänge ist.
Der Turbulator 32, 32' kann sich über die gesamte Schaufel breite bzw. des Schaufelblattes orthogonal zur Zeichenebene erstrecken und ist als eine in Strömungsrichtung betrachtet negative Stufe ausgebildet. Der Turbulator 32, 32' hat eine sich senkrecht von der Originalkontur erstreckende ebene Stufenfläche 34 und ausgehend von einer verhältnismäßig scharfkantigen Stufenkante 36 eine sich stromauf erstreckende Tangentialfläche 38, die tangential in die Originalkontur übergeht. Die Geometrie wird über die komplette Schaufelhöhe fortgeführt. Der Turbulator 32, 32' hat eine Stufenhöhe k von k = 0,17 mm, was einer optimalen Stufenhöhe k bei einer Reynoldszahl Re2th von Re2th = 120.000 entspricht.

Der Turbulator 32, 32' begünstigt eine beschleunigte Transition durch vermehrten Impulsaustausch in die wandnahe Strömung. Insbesondere bewirkt der stufenartige Turbulator 32, 32' stromab der Stufenkante 36 einen sprunghaften Anstieg des Strömungsquerschnitts, was zu einer starken Beschleunigung der Strömung an der Stufenkante 36 und zu einer vorzeitigen Destabilisierung der laminaren Grenzschicht und somit zu einer vorgezogenen Transition auf der Profilsaugseite 28 führt. Ein direkter Grenzschichtumschlag am Turbulator 32 findet nicht statt, sondern eine Verlagerung der natürlichen Transition stromauf.

Die positive verlustmindernde Wirkung des Turbulators 32 bleibt ausgehend von niedrigen Reynoldszahlen bis zu hohen Reynoldszahlen, die grundsätzlich durch ein abnehmendes Potential zur Verbesserung des saugseitigen Ablöseverhaltens gekennzeichnet sind, erhalten. So ist noch bei einer Reynoldszahl von Re2th = 200.000 eine deutliche Stromaufwirkung bzgl. der Transition aufgrund des Turbulators 32 zu beobachten. Selbst bei Reynoldszahlen von Re2th > 200.000 wird eine vorzeitige Transition und somit eine verlustmindernde Wirkung erzielt.

Offenbart ist eine Schaufel einer Strömungsmaschine, insbesondere eine Turbinenschaufel eines Flugzeugtriebwerks, zum Umlenken einer Strömung, mit einer Konturvariation zur passiven Grenzschichtbeeinflussung, wobei die Konturvariation unmittelbar stromab im Bereich eines maximalen Geschwindigkeitsmaximums des ursprünglichen Profils angeordnet ist.

## Patentansprüche

1. Schaufel (20) einer Strömungsmaschine, insbesondere eine Turbinenschaufel eines Flugzeugtriebwerks, zum Umlenken einer Strömung, die eine Profilvorderkante (24), eine Profilhinterkante (26), eine sich zwischen der Profilvorder- und der Profilhinterkante (24, 26) erstreckende Profilsaugseite (28), eine Profildruckseite (30) und eine Konturvariation (32) zur passiven Grenzschichtbeeinflussung aufweist, wobei die Konturvariation (32) unmittelbar stromab eines Geschwindigkeitsmaximums des ursprünglichen Schaufelprofils (22) angeordnet ist und wobei die Konturvariation (32) eine in Strömungsrichtung betrachtet negative Stufe aufweist, **dadurch gekennzeichnet, dass** die Stufe eine sich senkrecht zur Originalkontur der Profilsaugseite (28) aus dem ursprünglichen Schaufelprofils (22) nach Außen erstreckende Stufenfläche (34) aufweist und die Konturvariation (32) eine sich ausgehend von einer außerhalb des ursprünglichen Schaufelprofils (22) liegenden Stufenkante (36) stromaufwärts tangential an die Originalkontur der Profilsaugseite (28) herangeführte Tangentialfläche (38) aufweist.

2. Schaufel nach Anspruch 1, wobei die Konturvariation (32) in einem Bereich von der Profilvorderkante (24) beabstandet ist, der etwa 50% bis 85% einer axialen Sehnenlänge (lax) der Schaufel (20) entspricht.

3. Schaufel nach Anspruch 2 , wobei die Konturvariation (32) in einem Abstand von der Profilvorderkante (24) angeordnet ist, der etwa 65% der axialen Sehnenlänge (lax) entspricht.

4. Schaufel nach mindestens einem der Ansprüche 1, wobei die Stufe eine Stufenhöhe (k) im Bereich von k = 0,1 mm bis 0,4 mm hat.

5. Schaufel nach mindestens einem der Ansprüche 1 oder 4, wobei die Stufe eine Stufenhöhe von k = 0,17 mm aufweist.

6. Schaufel nach mindestens einem der Ansprüche 1, 4 bis 5, wobei die Stufe eine Stufenhöhe von k = 0,15 mm aufweist.

7. Schaufel nach mindestens einem der obigen Ansprüche, wobei die Konturenvariation (32) aus dem Ursprungsprofil mittels Materialauftrag und/oder Materialabtrag erhältlich ist.

## Claims

1. Blade (20) of a continuous flow machine, in particular a turbine blade of an aircraft engine, for the redirection of a flow, which has a profile leading edge (24), a profile trailing edge (26), a profile suction side (28) extending between the profile leading edge and the profile trailing edge (24, 26), a profile pressure side (30) and a contour variation (32) for passive boundary layer control, wherein the contour variation (32) is arranged directly downstream of a speed maximum of the original blade profile (22) and wherein the contour variation (32) has a negative step viewed in the flow direction, **characterised in that** the step has a step surface (34) which extends outwards from the original blade profile (22), perpendicularly to the original contour of the profile suction side (28), and the contour variation (32) has a tangential surface (38) which is led upstream tangentially from a step edge (36) lying outside the original blade profile (22) to the original contour of the profile suction side (28).

2. Blade according to claim 1, wherein the contour variation (32) is spaced apart from the profile leading edge (24) in a region which corresponds to approximately 50% to 85% of an axial chord length (lax) of the blade (20).

3. Blade according to claim 2, wherein the contour variation (32) is arranged apart from the profile leading edge (24) at a distance which corresponds to approximately 65% of the axial chord length (lax).

4. Blade according to at least one of claims 1, wherein the step has a step height (k) in the range from k = 0.1mm to 0. 4mm.

5. Blade according to at least one of claims 1 or 4, wherein the step has a step height of k = 0.17mm.

6. Blade according to at least one of claims 1, 4 to 5, wherein the step has a step height of k = 0.15mm.

7. Blade according to at least one of the above claims, wherein the contour variation (32) can be obtained from the original profile by means of material application and/or material removal.

## Revendications

1. Aube (20) d'une turbomachine, en particulier, aube de turbine d'un groupe motopropulseur d'avion, servant à dévier un flux, laquelle aube présente un bord d'attaque de profil (24), un bord de fuite de profil (26), un côté aspiration de profil (28) s'étendant entre le bord d'attaque de profil et le bord de fuite de profil (24, 26), un côté sous pression de profil (30) et une variation de contour (32) servant à influencer de manière passive la couche limite, la variation de contour (32) étant disposée directement en aval d'un maximum de vitesse du profil d'aube (22) initial et la variation de contour (32) présentant un palier négatif vu dans le sens du flux, **caractérisée en ce que** le palier présente une surface de palier (34) s'étendant de manière perpendiculaire par rapport au contour d'origine du côté aspiration de profil (28) vers l'extérieur depuis le profil d'aube (22) initial, et **en ce que** la variation de contour (32) présente une surface tangentielle (38) avancée en amont de manière tangentielle jusqu'au contour d'origine du côté aspiration de profil (28) en partant d'une arête de palier (36) située en dehors du profil d'aube (22) initial.

2. Aube selon la revendication 1, la variation de contour (32) étant tenue à distance dans une zone du bord d'attaque de profil (24), laquelle zone correspond environ à 50 % à 85 % de la longueur de corde (lax) axiale de l'aube (20).

3. Aube selon la revendication 2, la variation de contour (32) étant disposée à une distance donnée du bord d'attaque de profil (24), laquelle distance correspond environ à 65 % de la longueur de corde (lax) axiale.

4. Aube selon au moins l'une quelconque des revendications précédentes, le palier ayant une hauteur de palier (k) située dans la plage allant de k = 0,1 mm à 0,4 mm.

5. Aube selon au moins l'une quelconque des revendications 1 ou 4, le palier présentant une hauteur de palier de k = 0,17 mm.

6. Aube selon au moins l'une quelconque des revendications 1, 4 à 5, le palier présentant une hauteur de palier de k = 0,15 mm.

7. Aube selon au moins l'une quelconque des revendications ci-dessus, la variation de contour (32) étant obtenue à partir du profil initial au moyen d'une application de matériau et/ou d'un enlèvement de matériau.
